## Europäisches Patentamt
## European Patent Office
## Office européen des brevets

(11) Publication number: **0 069 176**
**A1**

(12) **EUROPEAN PATENT APPLICATION**

(21) Application number: 81303043.4

(22) Date of filing: 03.07.81

(51) Int. Cl.³: **A 01 N 1/02**
**F 26 B 5/06**

(43) Date of publication of application:
12.01.83 Bulletin 83/2

(84) Designated Contracting States:
AT BE CH DE FR GB IT LI LU NL SE

(71) Applicant: AMERICAN HOME PRODUCTS
CORPORATION
685, Third Avenue
New York, New York 10017(US)

(72) Inventor: Hurwitz, Arthur
48, Prospect Road
Centerport New York 11721(US)

(72) Inventor: Michelucci, John
16, Sandra Avenue
Plattsburgh New York 12901(US)

(72) Inventor: Krupey, John
2645 Raudot Street
Montreal Quebec, H4E 2P6(CA)

(74) Representative: Wileman, David Francis et al,
c/o John Wyeth and Brother Limited Huntercombe Lane
South
Taplow Maidenhead Berkshire SL6 OPH(GB)

(54) **Method of obtaining a lyophilized product.**

(57) A process for preparing a package of dry matter comprising at least two immunological reagent materials, which are incompatible with each other in the presence of moisture, is disclosed. The process involves preparing separate aqueous liquid compositions of each of the reagent materials; charging the liquid compositions, either separately and simultaneously or together in a single precooled charge, into a container maintained at a temperature substantially below the freezing temperature of each of the separate liquid compositions or of the mixture of the liquid compositions so that freezing of the charge or charges of the liquid compositions ensues on the inner surface of the container; and then lyophilizing the frozen mass or masses.

EP 0 069 176 A1

COMPLETE DOCUMENT

# METHOD OF OBTAINING A LYOPHILIZED PRODUCT

This invention relates to a process for obtaining a package containing at least one mass of dry matter comprising at least two materials incompatible with each other in the presence of moisture. More specifically, this invention relates to a process of obtaining a multicomponent, lyophilized immunological reagent.

A problem exists in producing a dry mixture of two or more materials which are incompatible or react with each other in the presence of moisture. Exposure to conditions which allow the two materials to react must be minimized.

Various methods have been employed in the past to obtain a product containing at least two materials incompatible with each other in the presence of moisture.

In U.S. Patent 3,269,905, granted on August 30, 1966 to C.W. Damaskus, a method is described in which reagents that are incompatible with each other in the presence of moisture are subjected to freezing in successive layers in a container and thereafter the frozen strata is freeze-dried.

In U.S. Patent 3,616,543, granted November 2, 1971 to E.S. Barclay, a method is described in which reagents that are incompatible with each other in the presence of moisture are sequentially charged in liquid form into a container with freezing of the charge and rotation of the container between charges so that the separate charges to not touch, and then lyophilizing the frozen charges.

In U.S. Patent 3,862,302, granted January 21, 1975 to R.T. Price et al., a method is described in which reagents in solution are separately formed into frozen beads or spheres and then placed into a container for lyophilization.

A simple, quick process now has been found for producing a dry mixture of two or more such incompatible materials.

According to this invention, a process for obtaining a package containing at least one mass of dry matter comprising at least two immunological reagent materials incompatible with each other in the presence of moisture is realized by:

(a)    preparing separately an aqueous liquid composition of each of the materials;

(b)    charging the liquid compositions into a container maintained at a temperature substantially below the freezing temperature of each of the separate liquid compositions or of a mixture of the liquid compositions so that freezing of the charge or charges of the liquid compositions ensues on the inner surface of the container;  and

(c)    lyophilizing the frozen mass or masses;    characterised in that  the separate liquid compositions are simultaneously charged into the container ;        or a  mixture of the liquid compositions is prepared by cooling each of the separate liquid compositions to a temperature slightly above their freezing point and mixing the cooled liquid compositions to obtain a mixture for charging.

The liquid compositions are charged in such predetermined amounts that the freezing of the charge or charges immediately occurs on the inner surface of the container.

Preferably the container is an upright container.

In one embodiment of the invention, the separate liquid compositions are simultaneously charged directly into the bottom of an upright container. In a preferred embodiment which provides a more cautionary approach, the liquid compositions are simultaneously charged onto the opposite side walls of the container. This latter approach is preferred when the quantities of the liquid compositions are such that they do not instantaneously freeze upon contact with the cooled container. When the charged quantities are such that they do not instantaneously freeze and the materials are especially incompatible (very reactive) then the liquid compositions are charged onto the upper portions of the opposite side walls of the container. In an especially preferred embodiment the separate liquid compositions are precooled to a temperature slightly above their freezing point and then simultaneously charged into the container. The use of precooled liquid compositions is especially useful wherein the upright container comprises a receptacle with a small surface area or one which is shallow. An example of such a receptacle is found in a Microtiter plate manufactured by Cooke Laboratory Products of Alexandria, Virginia. This plate contains a multiplicity (96) of shallow "vee" shaped wells or "u" shaped cupules, each well having a capacity of about 0.25 ml to 0.30 ml.

In a second embodiment of the invention each of the two liquid compositions is cooled separately to 1 to 5° C above its freezing point. The cooled liquid compositions are mixed and at a temperature of 1 to 5° C above the freezing point of the mixture, the mixture is charged directly into the bottom of an upright container which is maintained at a temperature substantially below (e.g. 50 to 100° C below) the freezing point of the mixture.

Accordingly, this invention provides a method of obtaining a convenient and practical form of immunological reagents, for example, the immunological reagents used for detecting human chorionic gonadotropin (hCG), luteinizing hormone (LH), follicle stimulating hormone (FSH) or human menopausal gonadotropin. Moreover, a test plate suitable for performing immunologic reactions is provided, the test plate having at least one well of a capacity of about 0.1 to 1.0 ml., employing reagents which are incompatible with each other in the presence of moisture. In this instance, the incompatible reagents are charged in a volume equal to about 20 to 60% of the volume of the well. Subsequent freezing and lyophilization of the mixture of reagents in the well gives the test plate ready for use. By following the preceding procedure, technical problems (e.g. interaction of the reagents, spilling, excessive foaming, and the like), which are encountered when incompatible reagents simply are added to the well, and the charged plates thereafter are subjected to freezing and lyophilizing conditions, are eliminated or minimized.

In a still further refinement of this latter embodiment, the ionic strength of the pre-lyophilized reagents is increased by a factor of 2 to 3, preferably 2.5, over the ionic strength of reagents usually used for immunological reagents when the immunological reagents are applied to a test plate having a plurality of shallow, small volume wells of about 0.2 to 0.3 ml.

The process of the invention will now be described in connection with the accompanying drawings wherein the separate liquid compositions are simultaneously charged onto the opposite side walls of an upright container and in which:

Figure 1 is a front view of a reagent vial showing two lyophilized reagents adhering to each side.

Figure 2 is a cross-sectional view taken along line 2-2 of Figure 1.

Figure 3 is a top view of a system for loading, filling and unloading reagent vials.

Figure 4 is a side elevation of the filling system taken along line 4-4 of Figure 3.

Figure 5 is an enlarged view of a reagent vial being filled in the system of Figure 4 taken along line 5-5 of Figure 3.

Figure 6 is an enlarged view of a filled reagent vial in the system of Figure 4 taken along line 6-6 of Figure 3.

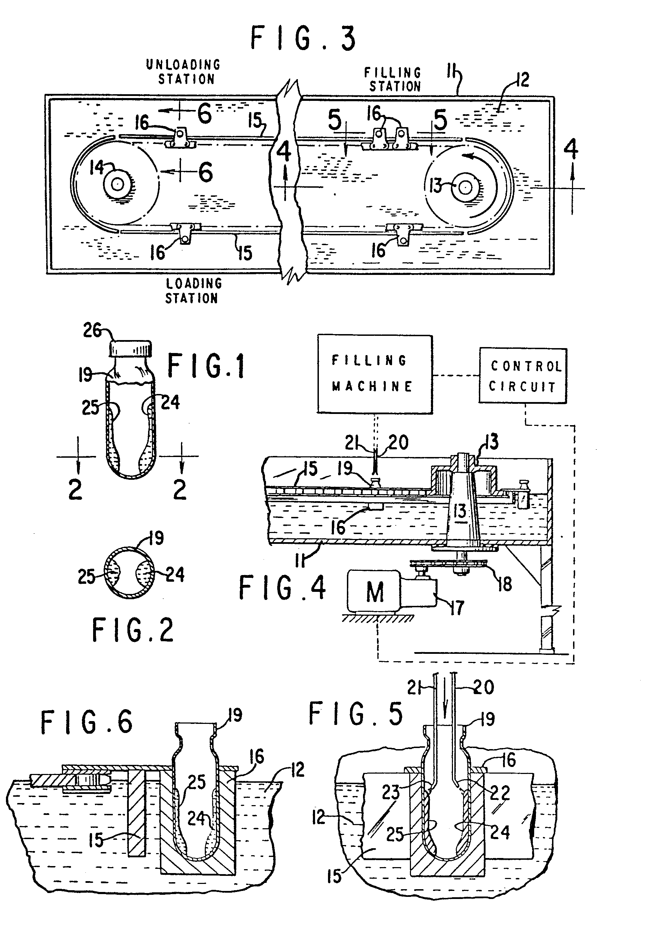

In one aspect of the process of the invention, Figure 3 shows a bath 11 containing a body of freezing liquid 12 such as liquid nitrogen. Mounted within bath 11 are sprockets 13 and 14 which support revolving chain 15 having attached thereto reagent bottle holders 16. Referring now to Figure 4, sprocket 13 is driven by motor 17 through belt drive assembly 18. Motor 17 is controlled through a control circuit and synchronized with a filling machine to align empty reagent bottles 19 for filling. Depending from the filling machine are pipettes 20 and 21 shown in raised position in Figure 4 and in lowered position inside reagent bottle 19 in Figure 5. Pipettes 20 and 21 have tips 22 and 23 respectfully, directed outwardly towards the side-walls of reagent bottle 19. Each reagent solution or suspension is pumped through a proportioning pump in the filling machine, thereby measuring a predetermined amount of solution per unit time, into pipettes 20 and 21 each of which discharges a predetermined, accurately measured amount of reagent onto the sides of the reagent bottle 19, which reagents 24 and 25 immediately freeze to the side of the bottle and do not mix at the bottom, as is shown in Figure 6. Reagent bottles 19 are removed from holders 16 at the unloading station and placed in racks for lyophilization after which they are capped with cap 26 and ready for use as shown in Figure 1.

The process of the invention can be illustrated with respect to reagents for an immunological or diagnostic test for detecting the presence of human chorionic gonadotrophin (hCG) in urine, which test is utilized in the diagnosis of pregnancy. Likewise, the process of this invention can be illustrated with respect to reagents for an immunological or diagnostic test for detecting the presence of luteinizing hormone (LH) in urine, which test is utilized in detecting ovulation in cycling women. In these instances, the liquid reagent compositions are aqueous.

An example of particular reagents that may be used for detecting hCG or LH are those described in U.S. Patent 4,123,343, granted October 31, 1978 to J. Krupey and E.F. Welchner and in European Patent Publication No. 102, published December 20, 1978, and Japanese Patent Application No. 8719/1979, published January 23, 1979, of M.A. Hirsch, D.S. Irvine and J. Krupey.

<div align="center">EXAMPLE 1</div>

Pregnancy Test Reagents

Immunologic and antiserum compositions useful as reagents in hemagglutination inhibition tests for pregnancy were prepared. A liquid composition of stabilized hCG sensitized red blood cells was prepared by suspending the cells in a lyophilization medium which contained a suitable carbohydrate diluent, buffer, sodium chloride, normal rabbit serum, merthiolate and ethylenediaminetetracetic acid (EDTA). A liquid composition of antiserum in the same lyophilization medium was prepared. The amount of antiserum in the liquid composition was adjusted to give a predetermined test sensitivity.

In one embodiment 50 microliters of each of the cell suspension and the antiserum solution, were simultaneously injected onto the inner surface of a siliconized round bottom vial having an internal diamater of 12-16 mm which was precooled in an acetone-dry ice bath at about -70° C and were instantaneously frozen.

In a second embodiment the two liquid compositions were cooled separately to a temperature of 2-5° C and then mixed. Immediately thereafter, 0.1 ml of the mixture was injected into the bottom of a round bottomed vial, siliconized on its inner surface and having an internal diameter of 12-16 mm, the round bottomed vial having been precooled in an acetone-dry ice bath at about -70° C. The mixture instantly froze.

The frozen reagents of each embodiment were lyophilized immediately in a freeze dryer for 16-20 hours at about 75 to 200 micron Hg. The dried material of both embodiments performed as anticipated when tested for specific sensitivity to hCG.

## EXAMPLE 2

Pregnancy Test Reagents-Simultaneous Charging

Sensitized red blood cell suspension and antiserum solution were prepared as described in the art and Example 1 and having quantities adjusted so that volumes of 50 microliters or less contained the material necessary to give a predetermined test sensitivity. The two reagent solutions were cooled to a temperature of 2-4° C and then simultaneously injected from an automatic pipette into the bottom of a series of wells contained in a multiwelled plate, sold under the trademark "Microtiter", which had been precooled in a dry ice-isopropanol mixture and were instantaneously frozen. The plate containing the reagents was lyophilized in a freeze dryer for 16-20 hours at about 75 to 200 microns Hg. The plate in the freeze dryer rested on a dry ice, pre-cooled aluminium block. The dried materials performed as anticipated when tested for specified senstivity to hCG.

## EXAMPLE 3

Pregnancy Test Reagents - Single charging

Each of the two liquid compositions, described in Example 1, were cooled to a temperature of 2-4° C, mixed and immediately injected from an automatic pipette (0.1 ml aliquots) into the bottom of a series of wells contained in a multiwelled plate, sold under the trademark "Microtiter", which had been precooled in a dry ice-isopropanol mixture. The mixture of the liquid compositions instantly froze. The plate containing the reagents was lyophilized in a freeze dryer for 16-20 hr at about 70 to 200 microns Hg. The plate in the freeze dryer rested on a dry ice, pre-cooled aluminium block. The dried materials performed as anticipated when tested for specified sensitivity to hCG.

## EXAMPLE 4

Ovulation Test Reagents

a)    Preparation of first liquid composition

A suspension of stabilized, sensitized red blood cells (see European Patent Application noted above) was washed three times with a 0.15 M phosphate buffer solution (pH=7.0). The washed cells were resuspended as a 0.625% v/v suspension in a lyophilization buffer (pH 7.0), prepared from 25g of sucrose, 25 ml of 1% merthiolate, 10 ml of normal rabbit serum (NRS, triply absorbed) and q.s. to 1 liter with 0.375 M phosphate buffer saline (PBS) containing EDTA, the EDTA being 0.125 M with respect to the PBS.

b)    Preparation of second liquid composition

A non-specific hCG or specific LH antiserum, prepared according to the procedure described in European Patent Publication No. 102 was diluted further with 0.15 M phosphate buffer saline (pH 7.0) containing 0.2% NRS (triply absorbed). The extent of dilution with the PBS was such that the proper concentration of antiserum was present in a 50 µl aliquot of the second reagent to give a predetermined test sensitivity with 50 µl aliquot of the first reagent.

These above liquid compositions may be stored at -100° C.

The first and second liquid compositions were each cooled separately to 2 to 5° C and the cooled reagents were mixed. The cooled mixture (2 to 5° C) was immediately injected from an automatic pipette (0.1 ml aliquots) into the bottom of a series of wells contained in a multiwelled plate, sold under the trademark "Microtiter", which had been precooled in a dry ice-isopropanol mixture. The mixture instantly froze. The plate containing the reagents was lyophilized in a freeze dryer for 16-20 hr at about 70 to 200 microns Hg. The plate in the freeze dryer rested on an aluminum block precooled with dry ice. The dried materials performed as anticipated when tested for specified sensitivity to LH, after the reagents in each well were mixed with 0.25 ml of the urine to be tested.

By following the procedure of this example but applying the cooled
mixture to a round bottomed tube, siliconized on its inner surface instead
of the "Microtiter" plate, the tube having been precooled in an acetone dry-
ice bath at about -70° C, followed by immediately treating the tube and mixture
of reagents to the lyophilization procedure described in Example 1, a convenient
and efficaceous preparation to the lyophilized immunological reagent also
was obtained.

- 10 -

CLAIMS

1.  A process for obtaining a package containing at least
    one mass of dry matter comprising at least two
    immunological reagent materials incompatible with
    each other in the presence of moisture which comprises
    the steps of:
    (a) preparing separately an aqueous liquid composition
    of each of the materials;
    (b) charging the liquid compositions into a container
    maintained at a temperature substantially below the
    freezing temperature of each of the separate liquid
    compositions or of a mixture of the liquid compositions
    so that freezing of the charge or charges of the liquid
    compositions ensues on the inner surface of the
    container;  and
    (c) lyophilizing the frozen mass or masses;
    characterised in that the separate liquid compositions
    are simultaneously charged into the container, or a
    mixture of the liquid compositions is prepared by
    cooling each of the separate liquid compositions to
    a temperature slightly above freezing point and mixing
    the cooled liquid compositions to obtain a mixture for
    charging.

2.  A process as claimed in Claim 1 in which separate
    aqueous liquid compositions of each material are
    simultaneously charged into a container maintained at
    a temperature substantially below the freezing
    temperature of each of the liquid compositions in
    such predetermined amounts that the separate charges of
    liquid compositions freeze on the wall of  the container, and then lyophilizing the frozen masses.

3.  A process as claimed in Claim 1 or Claim 2 wherein the

- 11 -

separate liquid compositions are pre-cooled to a
temperature slightly above their freezing point prior
to charging simultaneously and separately.

4.  A process as claimed in Claim 1 for obtaining a
    package containing a mass of dry matter comprising at
    least two immunological reagent materials incompatible
    with each other in the presence of moisture comprising
    the steps of:
    (a) preparing separate liquid aqueous compositions of
    each of the materials;
    (b) cooling each of the liquid compositions to a
    temperature slightly above its freezing point;
    (c) mixing the cooled liquid compositions to obtain
    a mixture thereof;
    (d) charging the mixture of liquid compositions at
    a temperature slightly above the freezing point of
    the mixture into a container maintained at a
    temperature substantially below the freezing point
    of the mixture so that the mixture freezes in the
    container, and
    (e) lyophilizing the frozen mixture.

5.  A process as claimed in Claim 1 or Claim 4 in which
    a mixture of the liquid compositions is prepared
    wherein each of the liquid compositions is cooled to
    a temperature of about 1 to $5^{o}C$ above its freezing
    point and the mixture is charged at a temperature of
    about 1 to $5^{o}C$ above the freezing point of the
    mixture into the container.

6.  A process as claimed in any one of Claims 1 to 5
    wherein the container is an upright container.

7.  The process as claimed in Claim 6 wherein the container

- 12 -

is a shallow receptacle.

8.  A process as claimed in any one of Claims 1, 4 and 5
    wherein the charging of the separate or mixed liquid
    composition is directed to the bottom of an upright
    container.

9.  A process as claimed in any one of Claims 1 to 3
    wherein the simultaneous charging of the separate
    liquid compositions is directed into the opposite
    side walls of an upright container or shallow
    receptacle.

10. A process as claimed in any one of Claims 1 to 9
    wherein one liquid composition consists essentially
    of a predetermined immunologically effective amount of
    a suspension of sheep erythrocytes sensitized with
    human chorionic gonadotropin, and a second liquid
    composition consists essentially of a predetermined
    immunologically effective amount of human chorionic
    gonadotropin antiserum together with phosphate buffer.

FIG.3

UNLOADING STATION

FILLING STATION

LOADING STATION

FIG.1

FIG.2

FILLING MACHINE

CONTROL CIRCUIT

FIG.4

FIG.6

FIG.5

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int Cl 3) |
|---|---|---|---|
| A | FR-A-1 186 147 (BAYER) *Abstract* | 1 | A 01 N 1/02 F 26 B 5/06 |

-----

TECHNICAL FIELDS SEARCHED (Int. Cl. 3)

A 01 N
F 26 B

The present search report has been drawn up for all claims

| Place of search | Date of completion of the search | Examiner |
|---|---|---|
| THE HAGUE | 18-05-1982 | MALHERBE Y.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82